(19) Europäisches Patentamt
European Patent Office
Office européen des brevets

(11) **EP 1 864 086 B1**

(12) **EUROPÄISCHE PATENTSCHRIFT**

(45) Veröffentlichungstag und Bekanntmachung des Hinweises auf die Patenterteilung:
**30.09.2009 Patentblatt 2009/40**

(21) Anmeldenummer: **06723238.9**

(22) Anmeldetag: **06.03.2006**

(51) Int Cl.:
*G01D 5/14* *(2006.01)*        *G01D 5/16* *(2006.01)*

(86) Internationale Anmeldenummer:
**PCT/EP2006/002038**

(87) Internationale Veröffentlichungsnummer:
**WO 2006/102967 (05.10.2006 Gazette 2006/40)**

(54) **SENSORANORDNUNG UND VERFAHREN ZUR BESTIMMUNG EINES DREHWINKELS**

SENSOR SYSTEM AND METHOD FOR DETERMINING AN ANGLE OF ROTATION

SYSTEME DE CAPTEURS ET PROCEDE DE DETERMINATION D'UN ANGLE DE ROTATION

(84) Benannte Vertragsstaaten:
**FR GB IT**

(30) Priorität: **30.03.2005 DE 102005014509**

(43) Veröffentlichungstag der Anmeldung:
**12.12.2007 Patentblatt 2007/50**

(73) Patentinhaber: **austriamicrosystems AG**
**8141 Unterpremstätten (AT)**

(72) Erfinder: **FORSYTH, Richard**
**A-8010 Graz (AT)**

(74) Vertreter: **Epping - Hermann - Fischer**
**Patentanwaltsgesellschaft mbH**
**Ridlerstrasse 55**
**80339 München (DE)**

(56) Entgegenhaltungen:
**US-A- 6 104 187        US-B1- 6 768 301**

• **TRAVIS B: "HALL-EFFECT SENSOR ICS SPORT MAGNETIC PERSONALITIES" EDN ELECTRICAL DESIGN NEWS, REED BUSINESS INFORMATION, HIGHLANDS RANCH, CO, US, Nr. EUROPE, 9. April 1998 (1998-04-09), Seiten 81-82,84,86,8, XP000869214 ISSN: 0012-7515**

**Beschreibung**

Es ist bekannt, den aktuellen Drehwinkel eines rotierenden Körpers mithilfe von magnetischen Hallelementen zu detektieren, die entlang einem Kreisumfang angeordnet sind, auf dessen Mittelpunkt die Rotationsachse senkrecht steht. Dem Körper wird dazu ein magnetisches Feld zugeordnet, z.B. durch Verbinden mit einem Magneten, dessen Feldstärke am Sensorort mit einer Sinusabhängigkeit vom Drehwinkel variiert. Die Hallelemente erzeugen dabei eine elektrische Spannung, die sogenannte Hallspannung, die sowohl proportional zum Magnetfeld als auch zum BIAS-Strom der Hallelemente ist, entsprechend der Formel für den Halleffekt:

$$V_h = B \times I \times R_h$$

wobei $V_h$ die Hallspannung, B das Magnetfeld, I der BIAS-Strom und $R_h$ eine Konstante für den Hallsensor ist. Üblicherweise werden Hallsensoren mit identischen beziehungsweise angepassten konstanten BIAS-Strömen betrieben. Zur Detektion des Magnetfeldes eines einfachen Zweipolmagneten können zwei Hallsensoren verwendet werden, die zwei differenzielle Signale liefern und beispielsweise eine Abhängigkeit vom Sinus beziehungsweise vom Cosinus des zu bestimmenden Drehwinkel aufweisen.

Eine Sensoranordnung mit Hallelementen ist beispielsweise aus der WO 03/060537 A1 bekannt. Die einzelnen Sensoren der Sensoranordnung sind mit Signalmodulatoren verbunden, über die eine Verknüpfung der einzelnen Sensorsignale möglich ist, wobei der zu detektierende Parameter aus der Gesamtheit mehrerer Einzelsignale bestimmt wird.

In typischen Anwendungen werden die erhaltenen Sensorsignale (Hallspannungen) verstärkt. Um eine genaue Bestimmung des Winkels bzw. höhere Auflösung bei der Winkelbestimmung zu erhalten, wird üblicherweise eine Interpolation durchgeführt. Diese kann in einem IC erfolgen, dessen Funktion ähnlich einem Analog/Digital-Konverter ausgebildet ist, indem die analogen Sinus- und Cosinussignale in analoge oder digitale Signale konvertiert werden, die eine höhere Kreisfrequenz als die des zu bestimmenden rotierenden Körpers aufweisen. Ein bekannter Sensor hat beispielsweise einen Zehn-Bit-Ausgang, der eine 256-fache Interpolation erfordert.

Zur Interpolation können unterschiedliche Verfahren eingesetzt werden. Eine erste Möglichkeit besteht darin, die Sensorsignale mithilfe konventioneller Analog/Digital-Wandler in digitale Werte umzuwandeln, die proportional zum entsprechenden Sensorsignal, also proportional zum Sinus- oder Cosinuswert des Drehwinkels sind. Die digitalen Werte können dann in digitalen Arbeitstabellen wie zum Beispiel CORDIC verarbeitet werden und liefern zum zu bestimmenden Drehwinkel proportionale, digitale Signale.

Ein zweites Verfahren nutzt die Sensorsignale, wandelt diese direkt in digitale Werte um, wobei ein speziell ausgebildeter Analog/Digital-Wandler eingesetzt wird, der die richtige trigonometrische Charakteristik aufweist. Als Ergebnis werden digitale Werte erhalten, die direkt proportional zu dem zu bestimmenden Winkel sind.

Gemäß einem dritten bekannten Verfahren werden die Sensorsignale im analogen Bereich verarbeitet, um wiederum ein analoges Signal mit einer vervielfachten Kreisfrequenz zu erhalten. Dies kann beispielsweise mit einem symmetrischen Mischerschaltkreis erfolgen, wie er in Endgeräten der drahtlosen Kommunikation üblich ist. Das Prinzip eines solchen symmetrischen Mischers wird von den beiden folgenden Gleichungen bestimmt:

$$\sin 2\theta = 2\sin\theta\cos\theta$$

$$\cos 2\theta = \cos^2\theta - \sin^2\theta$$

wobei $\sin\theta$ und $\cos\theta$ die Sensorsignale und $\sin 2\theta$ und $\cos 2\theta$ die am Mischerausgang erhaltenen Nutzsignale sind, die gegenüber der Rotation des Körpers die doppelte Kreisfrequenz aufweisen. Es ist klar, dass die Funktion und die Qualität eines symmetrischen Mischers von der Fähigkeit des Mischers abhängig sind, eine Multiplikation, Addition und Subtraktion im analogen Bereich zu implementieren. Ein Mischer für drahtlose Kommunikationsanwendungen arbeitet üblicherweise mit konstanten Frequenzen und benötigt entsprechend schmalbandig ausgelegte Schaltungen. Im Gegensatz dazu kann bei einem Drehwinkelsensor die Frequenz von null (keine Rotation) bis zu einer gegebenen maximalen Drehgeschwindigkeit variieren. Dies macht es zusätzlich notwendig, die entsprechenden Schaltkreise breitbandig auszulegen. Mithilfe einer einzelnen Mischerstufe wird im Ergebnis die am Ausgang des Mischers erhaltene Kreisfrequenz gegenüber dem Eingangssignal verdoppelt. Nach einer oder mehreren Mischerstufen kann das Signal dann mit den weiter oben bereits beschriebenen digitalen Methoden verarbeitet werden. Alternativ ist es auch möglich, die am Mischerausgang erhaltenen Analogsignale direkt zur Drehwinkelbestimmung zu nutzen.

Aufgabe der vorliegenden Erfindung ist es, eine Sensoranordnung zur Bestimmung eines Ortsparameters entlang eines vorgegebenen Pfades und insbesondere zur Bestimmung eines Drehwinkels anzugeben, die einfach aufgebaut ist und eine verbesserte Interpolation erlaubt.

Diese Aufgabe wird erfindungsgemäß durch eine Sensoranordnung mit den Merkmalen von Anspruch 1 gelöst. Vorteilhafte Ausgestaltungen der Erfindung sowie ein Verfahren zur Bestimmung des Drehwinkels sind weiteren Ansprüchen zu entnehmen.

Grundlegende Idee der Erfindung ist es, den gesuchten Ortsparameter über den Wert einer physikalischen Größe zu bestimmen, die entlang des vorgegebenen Pfad eine sinusförmige Funktion ergibt. Es soll nun eine Möglichkeit geschaffen werden, die Kreisfrequenz (bezogen auf eine der sinusförmigen Funktion entsprechende Rotation) auf analoger Stufe in der Sensoranordnung integriert zu vervielfachen und dazu die Proportionalität des Sensorverhaltens zu einem BIAS-Strom zu nutzen. Dazu wird in der Sensoranordnung das Sensorsignal eines ersten Sensors zur Generierung eines BIAS-Strom für einen zweiten Sensor eingesetzt und dadurch eine Multiplikation der beiden Sensorsignale implementiert. Jeder Sensor detektiert dabei die physikalische Größe, z.B. ein Magnetfeld, das über den vorgegebenen Pfad sinusförmig variiert. Aus dem Wert der physikalischen Größe kann dann der zu bestimmende Ortsparameter abgeleitet werden.

Eine geeignete Sensoranordnung umfasst daher zumindest

- einen ersten und
- einen zweiten Sensor, die jeweils ein vom Sinus des Ortsparameters abhängiges Sensorsignal liefern, und
- einen ersten Verstärker, der aus dem ersten Sensorsignal einen ersten Steuerstrom generiert, der an den BIAS-Eingang des zweiten Sensors angelegt wird.

Am zweiten Sensor kann dann ein von sin2X abhängiges zweites Sensorsignal erhalten werden. Dies erlaubt die Bestimmung des dazugehörigen zu bestimmenden Ortsparameters am Ort X mit der doppelten Genauigkeit, da sin2X mit der doppelten Genauigkeit bezüglich X verarbeitet werden kann wie die einfache Sinusfunktion sinX. Der Ortsparameter ist z.B. eine Teilstrecke entlang des vorgegebenen Pfads oder der Drehwinkel eines rotierenden Körpers. Mit der Sensoranordnung gelingt es daher auch, die zeitliche Veränderung des Orts oder Winkels, also die Geschwindigkeit des Körpers bei seiner Bewegung entlang des Pfads oder seine Frequenz mit verbesserter Genauigkeit zu bestimmen.

Für die Sensoranordnung können Sensoren eingesetzt werden, die ein Sensorsignal mit sinusförmiger Abhängigkeit von einer zu bestimmenden Größe, insbesondere einem Drehwinkel oder Ort aufweisen. Prinzipiell geeignet sind dazu elektrische oder magnetische Sensoren, insbesondere jedoch Hallsensoren, die eine perfekt lineare Abhängigkeit vom Magnetfeld und dem BIAS Strom liefern können.

Die Anwendung der Sensoranordnung zur Bestimmung eines Orts auf einem vorgegebenen Pfad relativ zu einem gegebenen Ausgangspunkt ist dabei analog zur Bestimmung eines Drehwinkels, da eine Strecke als radiale Projektion eines Kreisbogens auf eine Gerade angesehen werden kann. Somit lässt sich aus der Strecke der dazugehörige Kreisbogen bzw. der dazugehörige Drehwinkel ableiten und umgekehrt. Es ist sogar möglich, mit der Sensoranordnung den Ort auf einer nicht linearen und beliebig und variierend gekrümmten Strecke zu bestimmen, wenn der Verlauf der Strecke bekannt ist und sich jeder Ort entlang der Strecke auf einem Kreisbogen eineindeutig abbilden lässt.

Vorteilhaft ist es, ein entlang des Pfades sinusförmig variierendes Magnetfeld vorzusehen. Dies gelingt durch alternierende Anordnung zweipoliger Magnetelemente entlang des Pfades. Durch eine Relativbewegung von Sensoranordnung und der Anordnung der Magnetelemente ändert sich der Wert des auf die Sensoranordnung einwirkenden Magnetfelds (entspricht hier der physikalischen Größe) mit sinusförmiger Abhängigkeit vom Ortsparameter X.

Zur Bestimmung eines Drehwinkels genügt ein einziges zweipoliges Magnetelement, das relativ zur Sensoranordnung rotiert.

Es bestehen grundsätzlich die Möglichkeiten, entweder die Sensoranordnung ortsstabil zu belassen und die Anordnung des oder der Magnetelemente dagegen zu bewegen, oder umgekehrt die Sensoranordnung relativ zur ortsfesten Anordnung von Magnetelementen zu bewegen.

Der erste und der zweite Sensor sind so miteinander verknüpft, dass das Sensorsignal des ersten Sensors als Multiplikator für das Sensorsignal des zweiten Sensors dienen kann. Bei einem Hallsensor kann dies in einfacher Weise durch Beaufschlagung des zweiten Hallsensors mit einem zum Sensorsignal des ersten Sensors proportionalen Steuerstrom (BIAS-Strom) erfolgen. Bei anderen Sensoren kann der BIAS-Strom auch in einen Verstärker eingespeist werden, der das Sensorsignal proportional zum BIAS-Strom verstärkt. In allen Fällen liefert die Sensoranordnung am zweiten Sensor als Sensorsignal eine Funktion sin2X, die eine doppelte Genauigkeit bei der Zuordnung des Drehwinkels bzw. Ortsparameters aus dem Sensorsignal des zweiten Sensors ermöglicht.

Möglich ist es auch, weitere Sensoren vorzusehen und entsprechend zu kaskadieren. Solche Anordnungen können dann n Kaskadenstufen umfassen, in denen zumindest je ein Sensor angeordnet ist. Die Sensoren sind an unterschiedlichen Sensorpositionen bezüglich des Drehwinkels X oder dem dazu korrespondierenden Ortsparameter entlang eines Pfads vorgesehen, z.B. entlang einer Geraden. In der Kaskade sind die Sensoren so miteinander verschaltet, dass jeder Sensor einer Kaskadenstufe m (mit $1 < m \leq n$) mit einem BIAS-Strom beaufschlagt ist, der aus dem Sensorsignal eines Sensors einer darunter liegenden Kaskadenstufe z.B. aus dem Sensorsignal der Stufe m-1 generiert ist. Die Anzahl n ist beispielsweise 2 oder 3. Möglich sind aber auch bis zu 5 oder noch mehr Kaskadenstufen. Mit jeder Kaskadenstufe erhöht sich der Faktor, mit dem die Kreisfrequenz multipliziert wird und mit dem also die Genauigkeit bei der Bestimmung des Drehwinkels verbessert wird, jeweils um eins. Bei n Kaskadenstufen wird daher an der n-ten Kaskadenstufe ein Sensorsignal erhalten, welches proportional zum Wert sin(nX) ist.

Vorteilhaft ist es, auf der ersten Kaskadenstufe zumindest zwei Sensoren vorzusehen. Dies ermöglicht es, auf der ersten Kaskadenstufe mit den ersten Sensoren zwei unterschiedliche Sensorsignale zu erzeugen, von denen eines eine Abhängigkeit von sinX und das andere vorteilhaft eine Abhängigkeit von cosX aufweist, so dass die Sensoren zwei zueinander orthogonale Funktionen liefern können. Denn nur mit mindestens zwei Sensorsignalen ist eine exakte Bestimmung des Ortsparameters X möglich. Zwei unterschiedliche Sensorsignale stehen in einem Verhältnis zueinander, aus dem sich ohne zusätzlichen Referenzwert exakt der Ortsparameter des Ortes X bestimmen lässt.

In der Kaskade können dann in der zweiten Kaskadenstufe zumindest vier Sensoren vorgesehen sind. Diese können dann wahlweise mit einem BIAS-Strom beaufschlagt werden, der aus den jeweiligen in der ersten Stufe generierten und zu sinX oder zu cosX proportionalen Steuersignalen erhalten werden kann. Als BIAS Strom kann z.B. jeweils ein Steuerstrom der vorigen Kaskadenstufe eingesetzt werden. Möglich ist es aber auch, den BIAS Strom durch Addition oder Subtraktion unterschiedlicher Steuerströme zu erzeugen, was durch entsprechende Verschaltung der Stromleitungen besonders einfach realisiert werden kann.

Werden zusammen mit einer solchen Verschaltung auch noch geeignete Anordnungen der einzelnen Sensoren bezüglich ihrer Sensorposition relativ zum Drehwinkel X gewählt, so kann mit dieser Anordnung eine perfekt symmetrische Mischerfunktion implementiert werden.

Eine mit Hallsensoren arbeitende Sensoranordnung hat gegenüber bekannten Anordnungen zum Bestimmen des Drehwinkels den Vorteil, dass die Hallelemente sehr gute lineare Eigenschaften aufweisen und sich daher gut als Multiplikationselemente verwenden lassen. Darüber hinaus können als Verstärker Transimpedanzverstärker verwendet werden, deren Verhalten wohl bekannt und verstanden ist, und die gut in herkömmlicher CMOS-Technologie realisiert werden könnten.

In einer bevorzugten Ausführung ist die gesamte Sensoranordnung und die zugehörigen elektronischen Schaltkreise in einem einzigen integrierten Schaltkreis (IC) integriert, der eine mechanisch und räumlich stabile Beziehung zwischen den Sensorpositionen der einzelnen Hallsensoren mit den technischen Vorteilen integrierter Schaltkreise kombiniert.

Der integrierte Schaltkreis kann außerdem mit komplexeren Funktionen ausgestattet sein, beispielsweise mit einer Hallelement Offset Unterdrückung (Offset Cancellation), beispielsweise durch Stromrichtungsdrehen (Current Spinning).

Sind die Sensoren in einer Kaskade mit jeweils mehreren Sensoren pro Kaskadenstufe angeordnet, so sind zur Bestimmung eines Drehwinkels die Sensoren einer Stufe vorzugsweise alle auf dem Umfang eines Kreises angeordnet, der die Rotationsachse des Körpers zum Mittelpunkt hat. Sensoren anderer Kaskadenstufen können demgegenüber eine andere Entfernung zur Rotationsachse aufweisen, besitzen innerhalb einer Kaskadenstufe jedoch jeweils die gleiche Entfernung zur Achse.

Sensoren zur Bestimmung des Ortsparameters entlang eines nicht kreisförmigen und insbesondere linearen Pfads sind vorzugsweise ebenfalls linear angeordnet.

Die Sensoranordnung beziehungsweise der integrierte Schaltkreis kann auch bezüglich des BIAS-Stroms im Zeitmultiplex auf einer einzigen Kaskadenstufe betrieben werden. Dazu wird aus dem ersten Sensorsignal ein Steuerstrom generiert und zeitlich versetzt (also im Zeitmultiplex) als BIAS Strom an den ersten Sensor angelegt werden. Dazu ist allerdings Voraussetzung, dass das Umschalten im Zeitmultiplexbetrieb wesentlich schneller erfolgt als die mechanische Rotationsgeschwindigkeit, um keine zusätzliche Fehlerquelle zu schaffen.

Die Sensoranordnung kann so aufgebaut sein, dass die Summe aller BIAS-Ströme unabhängig vom Eingangsoder Ausgangssignal der Anordnung ist, sodass eine gute analoge Performance im Schaltkreis und in der Sensoranordnung erreichbar ist und dass der Stromverbrauch nahezu konstant ist.

Die Sensoranordnung kann in Drei-Phasen-Anwendungen, beispielsweise als Kommutator in Elektromotoren eingesetzt werden. Die Erfindung stellt eine außergewöhnlich elegante weil integrierte und exakte Methode dar, eine mehrfache Interpolation der Sensoren durchzuführen, die mit äußeren Schaltkreisen bei Weitem nicht so effizient durchgeführt werden kann.

Ein wesentlicher Aspekt der Erfindung ist die Auswahl der Sensorpositionen für die Sensoren innerhalb einer Kaskadenstufe.

Sind auf einer Kaskadenstufe k Sensoren vorgesehen, wobei $k \geq 2$, so ist eine Verteilung dieser Sensoren entlang eines Kreisumfangs vorteilhaft, bei der die Sensoren in ihrer Drehwinkelbeziehung gegeneinander versetzt sind. Vorteilhaft sind die Sensorpositionen so gewählt, dass pro Kaskadenstufe je ein Sensor ein von sinX und je ein Sensor ein von cosX abhängiges Sensorsignal liefern kann, bzw. dass die Sensoren zwei zueinander orthogonale Funktionen liefern. Es ist aber auch möglich, die Sensoren linear anzuordnen, wenn damit eine Bestimmung eines Ortes auf einem linearen Pfad bestimmt werden soll. Der Abstand der Sensoren ist dann vorteilhaft dem Abstand der Magnetelemente angepasst, um auch hier die geeigneten orthogonalen Phasenbeziehungen zu gewährleisten.

Die optimale Verteilung der Sensoren jeder Stufe ermöglicht eine Verfolgung der Rotationsbewegung oder der dazu korrespondierenden "linearen" Bewegung des Körpers in verschiedenen relativ zueinander festgelegten Phasenverhältnissen, sodass über die von den unterschiedlichen Sensoren gelieferten unterschiedlichen Sensorsignale eine optimale Zuordnung des Drehwinkels bzw. der analogen Entfernung aus der Vielzahl von einzelnen Sensorsignalen möglich ist. Wie bereits erwähnt, kann die Anzahl der Sensorsignale, die jeweils den gleichen Drehwinkel jedoch bei unterschiedlicher Phase angeben, durch Kombination einzelner Sensorsignale mittels Addition und Subtraktion der Steuerströme weiter erhöht werden. Dies ist in einfacher Weise durch serielle und parallele Verschaltung der Sensorsignale beziehungsweise der daraus generierten Steuerströme möglich und somit einfach implementierbar.

Die von der Sensoranordnung gelieferte Information, also die Sensorsignale der letzten Kaskadenstufe oder die Steuerströme, die aus diesen Sensorsignalen der letzten Kaskadenstufe generiert werden, werden zur Bestimmung des Drehwinkels einer Auswerteeinheit zugeführt, die gemäß einem der eingangs genannten Prinzipien gehorcht und aus den analogen Signalen den digitalen Wert für den zu bestimmenden Drehwinkel ergibt.

Im Folgenden wird die Erfindung anhand von Ausführungsbeispielen und den dazu gehörigen Figuren näher erläutert. Die Figuren dienen allein dem besseren Verständnis der Erfindung, sind daher nur schematisch und nicht maßstabsgetreu ausgeführt. Die Erfindung ist daher auch nicht auf die Ausführungsbeispiele beschränkt. Gleiche oder gleich wirkende Teile sind mit gleichen Bezugszeichen bezeichnet.

Figur 1 zeigt eine Sensoranordnung aus zwei Sensoren im elektrischen Schaltbild,

Figur 2 zeigt die geometrische Anordnung von acht Sensoren, die in zwei Kaskadenstufen miteinander verschaltet sind,

Figur 3 zeigt die gleiche Anordnung im elektrischen Schaltbild,

Figur 4 zeigt eine Anordnung von zwölf Sensoren, die in einer dreistufigen Kaskade verschaltet sind,

Figur 5 zeigt eine weitere Anordnung von zwölf Sensoren, die zweistufig kaskadiert sind,

Figur 6 zeigt eine weitere Anordnung von zwölf Sensoren in einer zweistufigen Kaskade,

Figur 7 zeigt eine die Anordnung von Sensorebene und rotierendem Körper,

Figur 8 zeigt eine die Anordnung von Magnetelementen relativ zur Sensorebene.

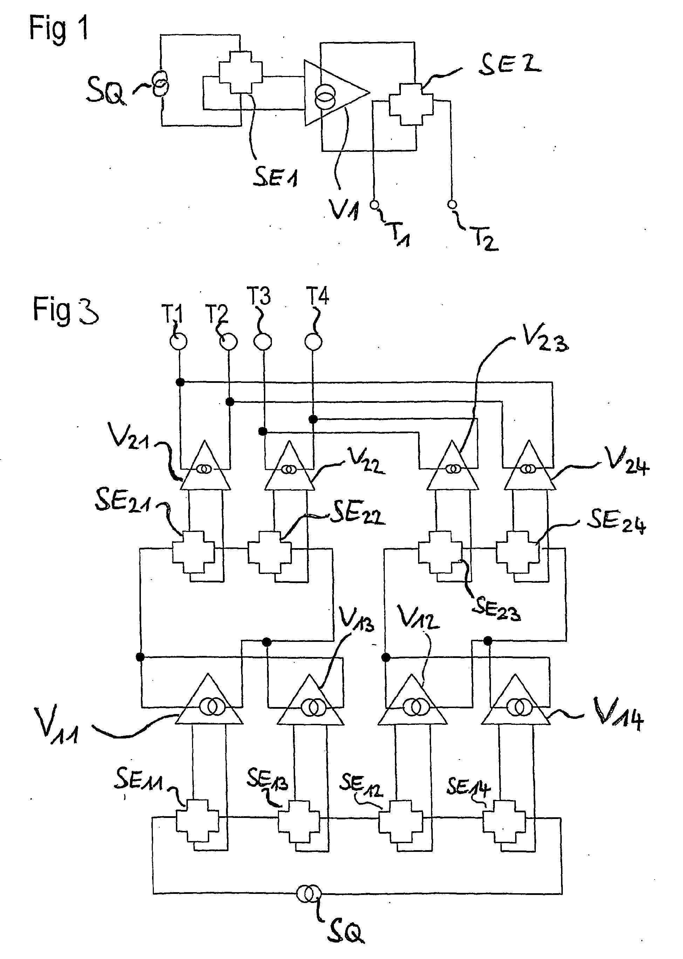

Figur 1 zeigt eine einfache Ausführungsform der Erfindung, bei der zwei als Hallelemente ausgebildete Sensoren SE1, SE2 miteinander kaskadiert sind. Ein Hallelement ist ein Halbleiterelement, welches auf seiner der xy-Ebene eines Koordinatensystems entsprechenden Oberfläche vier kreuzförmig angeordnete Kontakte aufweist. Legt man an ein erstes Paar entlang der virtuellen X-Achse angeordneter Kontakte eine Spannung an, so fließt ein BIAS-Strom in X-Richtung von dem einen Kontakt zum anderen. Wirkt nun in Z-Richtung ein Magnetfeld auf das Hallelement ein, so lässt sich an den beiden anderen, auf der Y-Achse hintereinander angeordneten Kontakten als Sensorsignal eine Spannung abgreifen, die sogenannte Hallspannung.

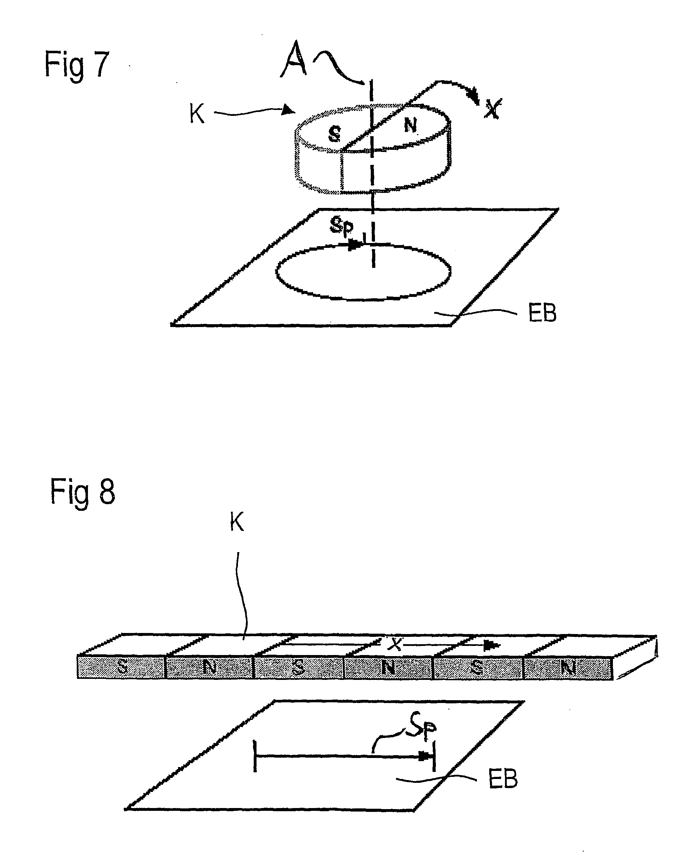

Beide Sensoren werden nun wie z.B. in Figur 7 dargestellt in einer Ebene EB vertikal zur Drehachse A eines rotierenden Körpers K angeordnet, vorzugsweise in gleicher Entfernung zur Drehachse A auf dem Pfad Sp und vorzugsweise mit einem Phasenversatz von 90 Grad bezüglich des Drehwinkels. An der Drehachse ist ein Magnet angeordnet und mit dem Körper K verbunden, so dass dessen Magnetfeld vertikal auf die in der Sensorebene EB angeordneten Sensoren (Hallelemente) einwirken kann. Der erste Sensor SE1 ist über eine Spannungsquelle SQ mit einem ersten Steuerstrom beaufschlagt.

Die am ersten Sensorelement SE1 abgegriffene Hallspannung wird einem ersten Verstärker V1, der als Transimpedanzverstärker ausgebildet ist, zugeführt. Dort wird das analoge Sensorsignal in einen dazu proportionalen Steuerstrom überführt. Aufgrund der Winkelabhängigkeit des Sensorsignals in Form der Funktion sinX ist also sowohl das Sensorsignal als auch der vom Verstärker V1 erzeugte Steuerstrom proportional zu sinX. Der Steuerstrom wird nun als BIAS-Strom an das zweite Sensorelement SE2 angelegt. Dessen Sensorsignal liegt als Hallspannung an den beiden Anschlüssen T1 und T2 an und kann der weiteren Verarbeitung beziehungsweise Auswertung zugeführt werden. Entsprechend der eingangs erwähnten Abhängigkeit der Hallspannung $V_h$ gemäß der Gleichung

$$V_h = B \times I \times R_h$$

ergibt sich die Hallspannung (zweites Sensorsignal) am zweiten Sensorelement SE2 als Produkt aus dem Steuerstrom und der Winkelabhängigkeit der Sensorfunktion des Hallelements. Je nach Phasenversatz des zweiten Sensorelements relativ zum ersten (hier z.B. 90°) kann sich an den Anschlüssen T1, T2 ein Sensorsignal abgreifen lassen, welches hier proportional zu sinX x cosX ist. Gemäß der Beziehung

$$2\sin X \cos X = \sin 2X$$

entspricht das an den Anschlüssen T1, T2 anliegende Sensorsignal also einem zur Funktion sin2X proportionalen Spannung. Damit liefert die Sensoranordnung den ersten von zwei Werten, aus denen sich in eindeutiger Weise der zu detektierende Drehwinkel X bestimmen lässt. Als weiterer Teilwert ist ein Sensorsignal erforderlich, das proportional zum Wert cos2X ist. Dieses kann in einfacher Weise gemäß der Beziehung

$$\cos 2X = \cos^2 X - \sin^2 X$$

durch entsprechende Verschaltung von zwei mal zwei Sensoren in ähnlicher Weise wie in Figur 1 dargestellt erhalten. Dabei kann der Wert sinX beziehungsweise cosX vom Sensorsignal des ersten Sensors SE1 erhalten werden und als BIAS-Strom an den zweiten Sensor angelegt werden. Entsprechend dessen Winkelabhängigkeit zum zu bestimmenden Drehwinkel und seiner Relativanordnung zum ersten Sensor liefert der zweite Sensor das Produkt der Eingangsfunktion mit einer sinX- oder einer cosX-Funktion.

Analog können die beiden Sensoren auch zur Bestimmung des Ortsparameters entlang eines Pfads bzw. zur Bestimmung einer Relativbewegung von Magnet und Sensoranordnung.

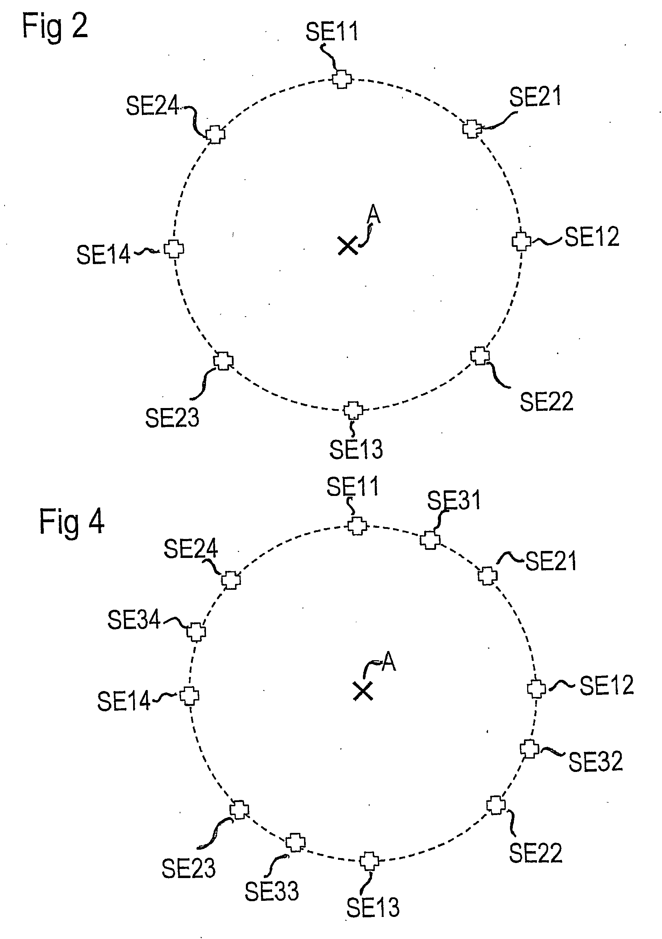

Figur 2 zeigt die geometrische Anordnung von insgesamt acht Sensoren, die in einer erfindungsgemäßen Sensoranordnung verschaltet sind. Die Anordnung stellt sämtliche zur Bestimmung des Drehwinkels erforderlichen Daten analog in Form der entsprechenden Sensorsignale zur Verfügung. Die Anordnung sämtlicher Sensoren erfolgt auf einer gemeinsamen Kreislinie um die Rotationsachse A, die vertikal zur Kreisebene mit den Sensoren steht. Alle Sensoren sind als Hallelemente ausgebildet und weisen die gleiche Ausrichtung bezüglich ihrer X- und Y-Achsen auf. Vier der Sensoren SE11 bis SE14 bilden die erste Kaskadenstufe und sind auf dem Kreisboden gegeneinander um jeweils 90 Grad versetzt. Weitere vier Sensoren SE21 bis SE24 bilden die zweite Kaskadenstufe, sind ebenfalls gegeneinander um 90 Grad versetzt und jeweils zwischen zwei Sensoren der ersten Kaskadenstufe angeordnet. Somit sind alle Sensoren SE1, SE2 der gesamten Sensoranordnung gleichmäßig entlag dem Kreisumfang mit der Drehachse als Mittelpunkt angeordnet.

Entsprechend der Anordnung des jeweiligen Sensors bezüglich des Winkels X entspricht das Sensorsignal von SE11 beispielsweise sinX, das Sensorsignal SE12 dagegen der cosX-Funktion. Das um 45 Grad gegenüber SE11 verschobene erste Sensorelement SE21 liefert ein Sensorsignal proportional zu sin(X+45°). Entsprechend liefert das Sensorelement SE22 ein Sensorsignal proportional zu cos(X+45°).

Figur 3 zeigt eine geeignete Verschaltung, in der die Sensorelemente SE der ersten Kaskadenstufe über dazwischen geschaltete Verstärker V mit den Sensorelementen SE2 der zweiten Kaskadenstufe verschaltet werden können.

Sämtliche Sensorelemente SE11 bis SE14 der ersten Kaskadenstufe sind seriell mit einer Stromquelle SQ so verbunden, dass durch alle diese Sensorelemente der gleiche BIAS-Strom fließt. Die Sensorelemente SE11 und SE13 sind bezüglich ihrer Sensorposition zur Drehachse A bezüglich des Drehwinkels X gegeneinander um 180 Grad versetzt und liefern deshalb als Sensorsignale einander betragsmäßig gleiche aber entgegensetzte Spannungen. Diese Sensorsignale werden über einen ersten Verstärker V11 beziehungsweise V13 in einen Steuerstrom umgewandelt, der am Ausgang der jeweiligen Verstärker anliegt und zu den Sensorsignalen proportional ist. In den beiden genannten Verstärkern V11 und V13 werden gleichgroße aber einander entgegengerichtete Steuerströme erhalten. Daher werden diese Ausgängen der beiden Verstärker V11 und V13 antiparallel verschaltet, sodass sich die Ströme phasengleich addieren können.

Die addierten und zu sinX proportionalen Steuerströme werden als BIAS-Ströme an die zweiten Sensoren SE21 und SE22 angelegt. Der zweite Sensor SE21 weist gegenüber dem ersten Sensor SE11 einen Phasenversatz von 45 Grad auf. Dementsprechend ist das von dem diesen Sensor gelieferte Sensorsignal proportional zu sin(X+45). Am Ausgang des dazugehörigen Verstärkers V21 wird daher das Produkt mit dem BIAS-Strom erhalten, welches proportional zu sinX x sin(X+45) ist.

Der zweite Sensor SE 22 weist gegenüber dem ersten Sensor SE11 einen Phasenversatz von 90 Grad plus 45 Grad auf, sodass das entsprechende Sensorsignal proportional zu cos(X+45) ist. Durch den angelegten BIAS-Strom entspricht das Sensorsignal dann dem Produkt sinX x cos(X+45°), welches am zweiten Verstärker V22 in den entsprechenden Strom umgewandelt wird.

In entsprechender Weise liefern die ersten Sensoren SE12 und SE14 jeweils ein zu cosX beziehungsweise -cosX proportionales Sensorsignal, das nach Umwandlung und Verstärkung mittels der ersten Verstärker V12 und V14 in Steuerströme umgewandelt wird, die wiederum phasengleich addiert als BIAS-Ströme an die zweiten Sensorelemente SE23 und SE24 angelegt werden. Nach Verstärkung der von SE12 und SE14 erhaltenen Sensorsignale durch die Verstärker V23 und V24 werden Ströme erhalten, die am Ausgang des Verstärkern V23 proportional zum Produkt cosX x(-sin(X+45)) beziehungsweise am Ausgang des Verstärkers V24 proportional zum Produkt cosX x (-cos(X+45)) sind.

Durch Parallelverschaltung der Ausgänge der zweiten Verstärker V21 und V24 werden an den Anschlüssen T1 und T2 die entsprechenden Ströme addiert, sodass ein Stromsignal erhalten wird, welches proportional zu cos (2X+45) ist. Entsprechend werden, die von den zweiten Verstärkern V22 und V23 erhaltenen Ströme addiert und liefern an den Anschlüssen T3, T4 einen Strom, der proportional zu sin(2X+45) ist.

Mit diesen beiden Strömen, die eine Sinusabhängigkeit von der doppelten Kreisfrequenz 2X beziehungsweise eine Abhängigkeit vom cos2X zeigen, lässt sich über eine Auswerteschaltung in einfacher Weise und mit der doppelten Genauigkeit der Wert X bestimmen.

Figur 4 zeigt eine Anordnung von zwölf Sensoren, die in drei Kaskadenstufen miteinander verschaltet werden können. Die vier Sensoren jeder Kaskadenstufe sind dabei innerhalb der gleichen Stufe gegeneinander um 90 Grad versetzt. Die Sensoren der zweiten Kaskadenstufe sind gegen die der ersten um 45 Grad versetzt, die der dritten Kaskadenstufe dagegen um 22,5 Grad gegen die Sensoren der ersten Kaskadenstufe. Die beiden ersten Sensoren SE11 und SE13 liefern eine Sinusabhängigkeit des Sensorsignals. Nach Verstärkung und Überführung in einen Steuerstrom werden die Steuerströme von SE11 und SE13 antiparallel addiert und an das zweite Sensorelement SE21 als BIAS-Strom angelegt. An das Sensorelement SE22 wird der gleiche Strom in entgegengesetzter Richtung angelegt. An das zweite Sensorelement SE23 werden die addierten und verstärkten und von cosX abhängigen Steuerströme von SE12 und SE14 als BIAS-Strom angelegt. An den Sensor SE24 dagegen wird ein BIAS-Strom in gleicher Höhe jedoch mit anderem Vorzeigen als BIAS-Strom angelegt.

In der dritten Kaskadenstufe werden an die dritten Sensoren SE3 Steuerströme angelegt, die sich durch Addition je zweier Steuerströme der zweiten Kaskadenstufe erhalten lassen. In der folgenden Tabelle sind noch einmal für jeden Sensor die entsprechende Drehwinkelposition, der Proportionalitätsfaktor des BIAS-Stroms, die Herkunft des BIAS-Stroms und die Abhängigkeit des Sensorsignals vom zu bestimmenden Drehwinkel angegeben.

| Sensor | Winkelposition | Proportionalitätsfaktor für Steuerstrom | Zusammensetzung des BIAS-Stroms | Erhaltenes Sensorsignal |
|---|---|---|---|---|
| SE11 | 0 | 1 | $I_{BIAS}$ | sinX |
| SE12 | 90 | 1 | $I_{BIAS}$ | cosX |
| SE13 | 180 | 1 | $I_{BIAS}$ | -sinX |
| SE14 | 270 | 1 | $I_{BIAS}$ | -cosX |
| SE21 | 45 | sinX | 0, 5 (I (SE11) - I (SE13)) | sinX sin (X+45) |
| SE22 | 135 | -sinX | 0,5(I(SE13)-I(SE11)) | -sinX cos (X+45) |
| SE23 | 225 | cosX | 0,5x(I(SE12)-I (SE14)) | cosX (-sin (X+45)) |
| SE24 | 315 | -cosX | 0,5x(I(SE14)-1 (SE12)) | -cosX (-cos(X+45)) |
| SE31 | 22,5 | sin (2X+45) | I (SE22) +I (SE23 ) | sin (2X+45) x sin(X+22,5) |
| SE32 | 112, 5 | -sin (2X+45) | -I(SE22)-I(SE23) | -sin(2X+45)x cos(X+22,5) |
| SE33 | 202,5 | cos(2X+45) | -I(SE11)-I(SE14) | cos(2X+45)x |

(fortgesetzt)

| Sensor | Winkelposition | Proportionalitätsfaktor für Steuerstrom | Zusammensetzung des BIAS-Stroms | Erhaltenes Sensorsignal |
|---|---|---|---|---|
| | | | | (-sin (X+22 , 5) ) |
| SE34 | 292,5 | -cos(2x+45) | I(SE11)+I(SE14) | -cos(2X+45)x (-cos(X+22,5)) |

Aus der Tabelle ist ersichtlich, dass hier in Abweichung vom allgemeinen Schema an die Sensoren SE33 und SE34 Steuerströme als BIAS-Strom angelegt werden, die von den Sensoren der ersten Kaskadenstufe erhalten werden.

Die dritten Sensoren der dritten Kaskadenstufe SE3 liefern Sensorsignale, die in Steuerströme umgewandelt werden können, die eine Abhängigkeit von sin3X beziehungsweise cos3X aufweisen. Addiert man beispielsweise die Steuerströme, die an den Verstärkern, hinter den dritten Sensoren SE32 und SE33 erhalten werden, resultiert ein Strom, der proportional zu sin(3X+45+22,5) ist. Entsprechend können die Steuerströme an den den dritten Sensoren SE31 und SE34 zugeordneten Verstärkern addiert weren, wobei man einen Steuerstrom erhält, der proportional zu cos (3X+45+22,5) ist. Es zeigt sich, dass die erhaltenen Signale alle einen Offset von 67,5 Grad aufweisen, jeweils relativ zu einem virtuellen zu bestimmenden Wert entsprechend an der Stelle des ersten Sensorelements SE11. Dieser Offset kann in einer entsprechenden Auswerteeinheit korrigiert werden und ist eine konstante Eigenschaft der in Figur 4 dargestellten Sensoranordnung. Eine Korrektur ist jedoch nicht nötig, wenn der Drehwinkel nicht absolut sondern relativ zu einem bestimmten Zeitpunkt (Startpunkt) erfasst werden soll.

Es wird betont, dass in den beiden Ausführungsbeispielen gemäß der Figuren 2 und 4 Additionen und Subtraktionen durch parallele und antiparallele Verschaltung von Strömen in einen analogen Schaltkreis mit hoher Genauigkeit realisiert werden kann. Die erforderlichen Multiplikationen werden durch die Sensoren ausgeführt, wobei die genauesten und besten Ergebnisse mit Hallelementen erreicht werden.

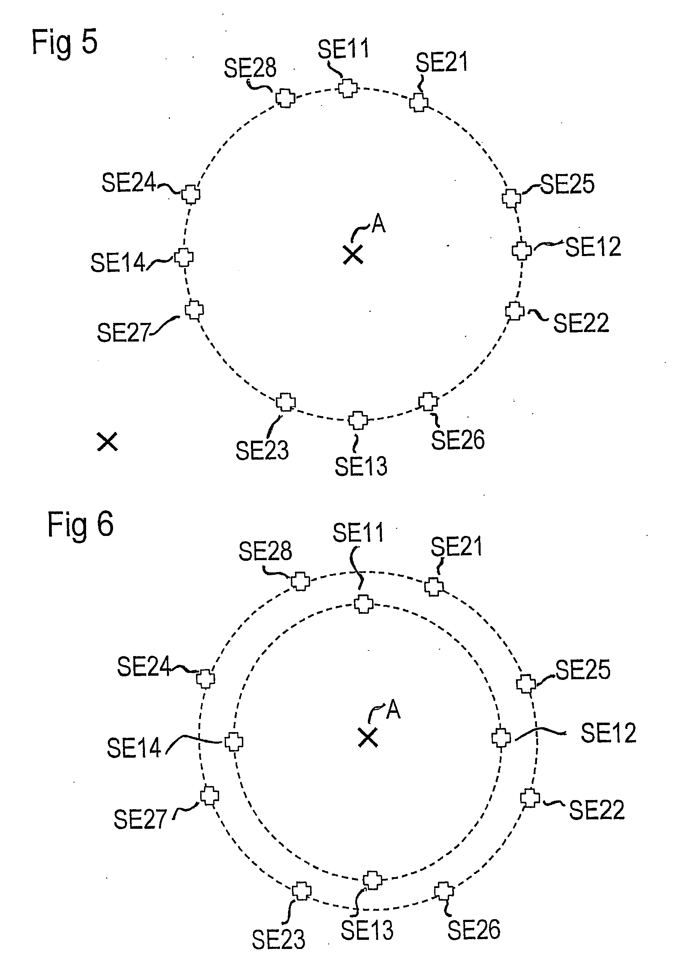

Figur 5 zeigt ein weiteres Ausführungsbeispiel der Erfindung und gibt eine Sensoranordnung an, bei der in einer ersten Kaskadenstufe vier Sensoren mit acht Sensoren einer zweiten Kaskadenstufe verschaltet sind. Die ersten Sensoren SE11 bis SE14 sind gegeneinander jeweils um 90 Grad versetzt. Die ersten vier Sensoren der zweiten Kaskadenstufe SE21 bis SE24 sind um 22,5 Grad gegen die ersten Sensoren SE1 versetzt. Die zweiten vier Sensoren der zweite Kaskadenstufe SE25 bis SE28 dagegen sind gegen die ersten Sensoren um -22,5 Grad versetzt.

Die folgende Tabelle gibt wieder für alle Sensorelemente Position, BIAS-Stromabhängigkeit, BIAS-Stromzusammensetzung und erhaltenes Sensorsignal für die zwölf Sensoren an:

| Sensor | Winkelposition | Abhängigkeit des BIAS-Stroms | Angelegte Steuerströme | Sensorsignal |
|---|---|---|---|---|
| SE11 | 0 | 1 | $I_{BIAS}$ | sinX |
| SE12 | 90 | 1 | $I_{BIAS}$ | cosX |
| SE13 | 180 | 1 | $I_{BIAS}$ | -sinX |
| SE14 | 270 | 1 | $I_{BIAS}$ | -cosX |
| SE21 | 22,5 | sin(X+22,5) | I(SE11)-I(SE13)+I(SE12)-I(SE14) | sin(X+22,5) sin(X+45) |
| SE22 | 112,5 | cos(X+22,5) | 1(SE11)-I(SE13)-I(SE12)+I(SE14) | cos(X+22,5) cos (X+45) |
| SE23 | 202,5 | -sin(X+22,5) | I(SE11)-I(SE13)+I(SE12)-I(SE14) | -sin(X+22,5) sin(X+45) |
| SE24 | 292,5 | -cos(X+22,5) | I(SE11)-I(SE13)-I(SE12)+I(SE14) | -cos(X-22, 5) cos (X+45) |
| SE25 | 67,5 | sin(X+22, 5+45) | I(SE12)-I(SEI4) | sin(X+22,5+45) cosX |
| SE26 | 157,5 | cos (X+22, 5+45) | I(SE11)-I(SE13) | cos(X+22,5+45)sinX |
| SE27 | 247,5 | -sin(X+22,5 +45) | I (SE12)-I(SE14) | -sin(X+22,5+45) cosX |

(fortgesetzt)

| Sensor | Winkelposition | Abhängigkeit des BIAS-Stroms | Angelegte Steuerströme | Sensorsignal |
|---|---|---|---|---|
| SE28 | 337,5 | $-\cos(X+22,5+45)$ | $I(SE11)-I(SE13)$ | $-\cos(X+22,5+45)$ $\sin X$ |

Mit der angegebenen Verschaltung ist eine Interpolation des mittels der Sensoren ermittelten Drehwinkels mit einer um den Faktor zwei verbesserten Genauigkeit möglich. Die zur Auswertung geeigneten Signale können durch Addition von Steuerströmen erhalten werden. Ein erstes Signal, welches proportional zu $\sin(2X+45+22,5)$ ist, kann durch Addition der Steuerströme der Sensoren SE25 + SE27 + SE26 - SE28 erhalten werden. Ein zweites Signal, das proportional zum Wert $\cos(2X+45+22,5)$ ist, wird durch folgende Kombination von Steuerströmen erhalten: $I(SE22)+I(SE24)-I(SE21)+I(SE23)$.

Auch hier haben alle auf der zweiten Stufe erhaltenen Signale ein Offset von 67,5 Grad relativ zu einem Referenzpunkt, der wie eben angegeben korrigiert werden kann.

Figur 6 zeigt eine Variation der in Figur 5 dargestellten Sensoranordnung, bei der sämtliche Sensoren der zweiten Kaskadenstufe eine andere Entfernung zur Rotationsachse A aufweisen als die Sensoren der ersten Kaskadenstufe SE1. Werden die Sensoren hier in gleicher Weise wie in Figur 5 miteinander verschaltet, so liefert die Anordnung genau das gleiche Ergebnis, zumindest die gleiche relative Abhängigkeit der Steuerströme.

Figur 7 zeigt die Anordnung eines Magneten, der hier dem Körper K entsprechen soll, über der Sensorebene EB. Die Sensoren sind z.B. entlang eines Pfads Sp angeordnet. Bestimmt wird der Ortsparameter X, der einem Kreisbogen relativ zu einem Bezugspunkt bzw. dem dazugehörigen Drehwinkel entspricht.

Figur 8 zeigt bezüglich ihrer Polarität alternierend angeordnete und entlang eines Pads Sp ausgerichtete magnetische Elemente (Pole), die mit dem Körper, dessen Ortsparameter entlang des Pfads Sp zu bestimmen ist, verbunden sind oder diesen darstellen. Gemessen wird stets die Relativbewegung bzw. die Relativposition zwischen Sensorebene EB und Körper K. Jeder Sensor SE auf dem Pfad Sp ist bei einer Relativbewegung entlang dem Pfad Sp einem sinusförmig variierenden Magnetfeld ausgesetzt und liefert ein entsprechend dazu proportionales Sensorsignal. Der Wert des Sensorsignals an einem Ort mit dem Ortsparameter X entspricht daher einem Wert $\mathrm{Sin}(X+C)$, wobei C eine Konstante und von der Wahl des Bezugspunktes und der relativen Sensorposition abhängig ist. Um die lineare Ortskoordinate (Ortsparameter X) in Relation zur Periode der Magnetelemente bzw. der Anordnung zu bringen, kann X rechnerisch normiert werden. Dies gelingt durch Überführen des Wertes X in den normierten Wert $X_N$ gemäß $X_N = 2\pi X/X_P$, wobei $X_P$ die Länge der "magnetischen Periode" in der Anordnung der Magnetelemente ist, also der Abstand zweier gleicher Pole bei regelmäßiger Anordnung.

Anhand der Ausführungsbeispiele wurden verschiedene Möglichkeiten vorgestellt, Drehwinkelsensoren und insbesondere Hallelemente in einem Array jeweils um die Rotationsachse A zu gruppieren und in Kaskaden so miteinander zu verschalten, dass pro Kaskadenstufe ein um eins erhöhter Faktor für die Genauigkeit der mit der Sensoranordnung erreichbaren Drehwinkelbestimmung erhalten wird. Der in den Ausführungsbeispielen gewählte Versatz der Sensoren der verschiedenen Kaskadenstufen ist nicht auf die dargestellten Werte beschränkt, doch ist mit den beschriebenen Ausführungsbeispielen die Auswertung erleichtert. Die Sensoren müssen auch nicht als Hallelemente realisiert sein. Geeignet sind auch andere Sensoren, die eine mathematisch genaue Sinusabhängigkeit vom zu bestimmenden Drehwinkel aufweisen, wobei die Sensoren, wenn sie direkt und ohne BIAS-Strom betrieben werden, auch mithilfe eines entsprechend geschalteten Verstärkerelements mit dem Wert der vorhergehenden Kaskadenstufe beziehungsweise mit dem Wert des Sensors der vorherigen Kaskadenstufe modifiziert werden.

**Patentansprüche**

1.  Sensoranordnung zur Bestimmung eines Ortsparameters eines sich entlang eines vorgegebenen Pfades bewegenden Körpers (K) am Ort X,

    - bei der ein erster Sensor (SE1) an einer ersten Sensorposition relativ zum Wert X vorgesehen ist, der ein erstes Sensorsignal erzeugt, das proportional zum Wert $\sin(X)$ ist,
    - bei der ein erster Verstärker (V1) vorgesehen ist, der aus dem ersten zu $\sin(X)$ proportionalen Sensorsignal einen ersten Steuerstrom generiert,
    - bei der ein gleich aufgebauter zweiter Sensor (SE2) an einer zweiten Sensorposition relativ zum Wert X vorgesehen ist,
    - bei der der zweite Sensor (SE2) mit dem Steuerstrom beaufschlagt ist, der von dem ersten Verstärker generiert wird.

**2.** Sensoranordnung nach Anspruch 1,
bei der eine Mehrzahl von Sensoren (SE1, ..SEm...SEn), die an unterschiedlichen Sensorpositionen vorgesehen sind, in einer n-stufigen Kaskade so miteinander verschaltet sind, dass zumindest ein Sensor (SEm) einer m-ten Kaskadenstufe mit $1 < m \leq n$ jeweils mit einem BIAS Strom beaufschlagt ist, der aus dem Sensorsignal eines oder mehrerer in der darunterliegenden Kaskadenstufe m-1 angeordneter Sensoren ($SE_{m-1}$) generiert wird, wobei $1 < n < 5$.

**3.** Sensoranordnung nach Anspruch 2,
bei der auf der ersten Kaskadenstufe zumindest zwei Sensoren (SE11, SE12), auf der zweiten oder allen höheren Kaskadenstufen zumindest vier Sensoren (SE21,SE22,SE23,SE24) vorgesehen sind.

**4.** Sensoranordnung nach einem der Ansprüche 1 bis 3,
bei der alle Sensoren (SE) in der Kaskade als magnetische Hallsensoren ausgebildet sind.

**5.** Sensoranordnung nach einem der Ansprüche 2 bis 4,

- bei der auf jeder Stufe der Kaskade zwei Sensoren (SE) vorgesehen sind, die gegenüber dem jeweiligen Sensor der gleichen Kaskadenstufe bezüglich des Wertes x versetzt sind,
- bei der jeder Sensor einer höheren Stufe m der Kaskade mit einem BIAS Strom beaufschlagt ist, der sich aus der Differenz oder Summe von Steuerströmen ergibt, die jeweils von in der vorgehenden Kaskadenstufe angeordneten Sensoren erhalten werden.

**6.** Sensoranordnung nach einem der Ansprüche 2 bis 5,

- bei der auf jeder Kaskadenstufe k Sensoren vorgesehen sind mit $k \geq 2$,
- wobei jeder Sensor einer höheren Stufe m der Kaskade mit einem BIAS Strom beaufschlagt ist, der sich aus der Differenz oder der Summe der Steuerströme aus zwei Sensoren ($SE_{m1}$, $SE_{m2}$) der jeweils vorgehenden Kaskadenstufe ergibt,
- wobei jeder Sensor dieser höheren Kaskadenstufe mit einer anderen Differenz oder Summe an Steuerströmen aus der vorhergehenden Kaskadenstufe beaufschlagt ist.

**7.** Sensoranordnung nach einem der Ansprüche 2 bis 6,
bei der auf jeder Kaskadenstufen k Sensoren vorgesehen sind, die gegeneinander einen Versatz bezüglich der zu bestimmenden Größe X aufweisen.

**8.** Sensoranordnung nach einem der Ansprüche 1 bis 7,
bei der alle Sensoren (SE) auf einer gemeinsamen Platine angeordnet sind.

**9.** Sensoranordnung nach einem der Ansprüche 1 bis 8,
bei der alle Sensoren (SE) einer Kaskadenstufe den gleichen Abstand zu einer Rotationsachse (A) des Körpers (K) aufweisen.

**10.** Sensoranordnung nach Anspruch 9,
bei der alle Sensoren (SE) unterschiedlicher Kaskadenstufen einen unterschiedlichen Abstand zur Rotationsachse (A) des Körpers aufweisen.

**11.** Sensoranordnung nach einem der Ansprüche 2 bis 10,

- bei der eine Auswerteeinheit (AE) vorgesehen ist,
- bei der am Eingang der Auswerteeinheit zumindest zwei Sensorsignale oder Steuerströme angelegt sind, die von den Sensoren ($SE_n$) oder Verstärkern ($V_n$) der n-ten und somit letzten Kaskadenstufe geliefert werden,
- wobei die Auswerteeinheit aus den von sin(n*X) und cos(n*X) abhängigen Eingangssignalen den Wert des Drehwinkels X bestimmt.

**12.** Sensoranordnung nach einem der Ansprüche 1 bis 11,
bei der die Verstärker (V) als Transimpedanzverstärker ausgebildet sind.

**13.** Verfahren zur Bestimmung des Drehwinkels X eines Körpers (K),

- bei dem ein erster und ein zweiter in einer Kaskade verschalteter Sensor (SE1,SE2) vorgesehen werden, die im Drehsinn des zu detektierenden Drehwinkels X gegeneinander versetzt sind und jeweils eine Abhängigkeit vom Sinus des Drehwinkels X aufweisen,
- bei dem das vom ersten Sensor (SE1) gelieferte Sensorsignal in einen BIAS-Strom umgewandelt und an den zweiten Sensor (SE2) angelegt wird, wobei als Sensorsignal des zweiten Sensors (SE2) das Produkt aus dem angelegten BIAS-Strom und der vom zweiten Sensor (SE2) detektierten sinX Funktion erhalten wird,
- bei dem aus dem Produkt in einer Auswerteeinheit (AE) der Wert von X ermittelt wird.

**14.** Verfahren nach Anspruch 13,

- bei dem zwei erste Sensoren (SE11, SE12) vorgesehen werden, deren Versatz bezüglich des Drehwinkels X so gewählt ist, dass sich in einem Sensor eine Abhängigkeit des Sensorsignals von sinX und im anderen Sensor eine Abhängigkeit des Sensorsignals von cosX ergibt,
- bei dem aus den Sensorsignalen der zwei ersten Sensoren BIAS-Ströme generiert und an zumindest zwei zweite Sensoren (SE2) angelegt werden.

**15.** Verfahren nach Anspruch 14,

- bei dem mehrere jeweils bezüglich des Drehwinkels x gegeneinander versetzte erste Sensoren (SE1) vorgesehen werden,
- bei dem die BIAS-Ströme für die jeweils höhere Kaskadenstufe m durch Addition oder Subtraktion der jeweiligen Sensorsignale oder der daraus generierten Ströme der vorherigen Kaskadenstufe m-1 erhalten werden.

**16.** Verfahren nach einem der Ansprüche 13 bis 15,

- bei dem als Sensoren (SE) magnetische Hallsensoren verwendet werden,
- bei dem die von sinx abhängige Hallspannung eines jeden ersten Sensors als Sensorsignal mittels eines Verstärkers (V1) in einen Steuerstrom überführt und als BIAS Strom für die zweiten Sensoren (SE2) verwendet wird.

**17.** Verfahren nach einem der Ansprüche 13 bis 16,
bei dem dritte Sensoren (SE3) vorgesehen werden, an die aus den Sensorsignalen der zweiten Sensoren (SE2) generierte Steuerströme als BIAS Ströme angelegt werden,
bei dem die Auswerteeinheit (AE) mit den Sensorsignalen der dritten Sensoren oder daraus generierter Ströme gespeist wird.

**18.** Verfahren nach einem der Ansprüche 13 bis 17,
bei dem erste und weitere Sensoren linear angeordnet werden, wobei aus den Winkelbeziehungen eines mit einem Magneten verbundenen Körpers zu den unterschiedlichen Sensoren der Ort X des Körpers bestimmt wird, indem aus einem mit der Sensoranordnung bestimmten Winkel durch Umrechnung des dazugehörigen Kreisbogens auf den durch eine radiale Projektion erhaltenen Ort umgerechnet wird.

## Claims

**1.** Sensor arrangement for determining a location parameter of a body (K), which moves along a predefined path, at the location X,

- in which a first sensor (SE1) which produces a first sensor signal that is proportional to the value sin(X) is provided at a first sensor position relative to the value X,
- in which a first amplifier (V1) is provided which uses the first sensor signal that is proportional to sin(X) to generate a first control current,
- in which an identically designed second sensor (SE2) is provided at a second sensor position relative to the value X,
- in which the control current which is generated by the first amplifier is applied to the second sensor (SE2).

**2.** Sensor arrangement according to Claim 1,
in which a plurality of sensors (SE1, ..SEm...SEn) which are provided at different sensor positions are connected in an n-stage cascade in such a manner that a bias current is respectively applied to at least one sensor (SEm) in an mth cascade stage, where $1 < m \leq n$, said bias current being generated from the sensor signal from one or more sensors ($SE_{m-1}$) arranged in the underlying cascade stage m-1, where $1 < n < 5$.

3. Sensor arrangement according to Claim 2,
   in which at least two sensors (SE11, SE12) are provided in the first cascade stage, and at least four sensors (SE21, SE22, SE23, SE24) are provided in the second cascade stage or in all higher cascade stages.

4. Sensor arrangement according to one of Claims 1 to 3,
   in which all of the sensors (SE) in the cascade are in the form of magnetic Hall sensors.

5. Sensor arrangement according to one of Claims 2 to 4,

   - in which each stage of the cascade contains two sensors (SE) which are offset with respect to the respective sensor in the same cascade stage as regards the value x,
   - in which a bias current which is produced from the difference or sum of control currents which are each obtained from sensors arranged in the preceding cascade stage is applied to each sensor in a higher stage m of the cascade.

6. Sensor arrangement according to one of Claims 2 to 5,

   - in which k sensors are provided in each cascade stage, where $k \geq 2$,
   - a bias current which is produced from the difference or sum of the control currents from two sensors ($SE_{m1}$, $SE_{m2}$) in the respective preceding cascade stage being applied to each sensor in a higher stage m of the cascade,
   - another difference or sum of control currents from the preceding cascade stage being applied to each sensor in this higher cascade stage.

7. Sensor arrangement according to one of Claims 2 to 6,
   in which k sensors which are offset with respect to one another as regards the variable X to be determined are provided in each cascade stage.

8. Sensor arrangement according to one of Claims 1 to 7,
   in which all of the sensors (SE) are arranged on a common printed circuit board.

9. Sensor arrangement according to one of Claims 1 to 8,
   in which all of the sensors (SE) in a cascade stage are at the same distance from an axis of rotation (A) of the body (K).

10. Sensor arrangement according to Claim 9,
    in which all of the sensors (SE) in different cascade stages are at a different distance from the axis of rotation (A) of the body.

11. Sensor arrangement according to one of Claims 2 to 10,

    - in which an evaluation unit (AE) is provided,
    - in which at least two sensor signals or control currents which are provided by the sensors ($SE_n$) or amplifiers ($V_n$) in the nth and thus last cascade stage are applied to the input of the evaluation unit,
    - the evaluation unit determining the value of the angle of rotation X from the input signals which depend on sin (n*X) and cos(n*X).

12. Sensor arrangement according to one of Claims 1 to 11,
    in which the amplifiers (V) are in the form of transimpedance amplifiers.

13. Method for determining the angle of rotation X of a body (K),

    - in which a first and a second sensor (SE1, SE2), which are connected in a cascade, are offset with respect to one another in the direction of rotation of the angle of rotation X to be detected and are each dependent on the sine of the angle of rotation X,
    - in which the sensor signal provided by the first sensor (SE1) is converted into a bias current and is applied to the second sensor (SE2), the product of the applied bias current and the sinX function detected by the second sensor (SE2) being obtained as the sensor signal from the second sensor (SE2),
- in which the value of X is determined from the product in an evaluation unit (AE).

**14.** Method according to Claim 13,

- in which two first sensors (SE11, SE12) are provided whose offset as regards the angle of rotation X is selected in such a manner that the sensor signal in one sensor depends on sinX and the sensor signal in the other sensor depends on cosX,
- in which bias currents are generated from the sensor signals from the two first sensors and are applied to at least two second sensors (SE2).

**15.** Method according to Claim 14,

- in which a plurality of first sensors (SE1) are provided which are each offset with respect to one another as regards the angle of rotation x,
- in which the bias currents for the respective higher cascade stage m are obtained by adding or subtracting the respective sensor signals, or the currents generated from the latter, from the previous cascade stage m-1.

**16.** Method according to one of Claims 13 to 15,

- in which magnetic Hall sensors are used as the sensors (SE),
- in which the Hall voltage depending on sinx of each first sensor is converted as a sensor signal into a control current using an amplifier (V1) and is used as bias current for the second sensors (SE2).

**17.** Method according to one of Claims 13 to 16,
in which third sensors (SE3) are provided, with control currents which are generated from the sensor signals from the second sensors (SE2) being applied as bias currents to said third sensors,
in which the evaluation unit (AE) is fed with the sensor signals from the third sensors or with currents which are generated therefrom.

**18.** Method according to one of Claims 13 to 17,
in which first and further sensors are arranged in a linear manner, and
the location X of the body being determined from the angular relationships between a body, which is connected to a magnet, and the different sensors by converting it from an angle which is determined with the sensor arrangement by converting the associated circular arc to the location obtained by radial projection.

**Revendications**

**1.** Agencement de capteurs destiné à déterminer un paramètre de lieu d'un corps (K) se déplaçant le long d'une trajectoire définie au lieu X,

- où un premier capteur (SE1) générant un premier signal de capteur proportionnel à la valeur sin(X) est prévu à une première position de capteur relativement à la valeur X,
- où un premier amplificateur (V1) générant un premier courant de commande à partir du premier signal de capteur proportionnel à sin(X) est prévu,
- où un deuxième capteur (SE2) pareillement constitué est prévu à une deuxième position de capteur relativement à la valeur X,
- où le deuxième capteur (SE2) est alimenté par le courant de commande généré par le premier amplificateur.

**2.** Agencement de capteurs selon la revendication 1,
où une pluralité de capteurs (SE1, ... SEm.. SEn) qui sont prévus à différentes positions de capteur sont interconnectés dans une cascade à n étages de telle manière qu'au moins un capteur (SEm) d'un m-ième étage de cascade où $1 < m \leq n$ est alimenté respectivement par un courant BIAS généré à partir du signal de capteur d'un ou de plusieurs capteurs (SEm-1) disposés dans l'étage de cascade inférieur m-1, où $1 < n < 5$.

**3.** Agencement de capteurs selon la revendication 2,

où au moins deux capteurs (SE11, SE12) sont prévus au premier étage de cascade et au moins quatre capteurs (SE21, SE22, SE23, SE24) sont prévus au deuxième ou à tous les étages de cascade supérieurs.

**4.** Agencement de capteurs selon l'une des revendications 1 à 3,
où tous les capteurs (SE) dans la cascade sont constitués comme capteurs magnétiques de Hall.

**5.** Agencement de capteurs selon l'une des revendications 2 à 4,

- où deux capteurs (SE) décalés par rapport au capteur respectif du même étage de cascade relativement à la valeur x sont prévus à chaque étage de la cascade,
- où chaque capteur d'un étage supérieur m de la cascade est alimenté par un courant BIAS résultant de la différence ou de la somme de courants de commande qui sont obtenus respectivement à partir de capteurs disposés dans l'étage de cascade précédent.

**6.** Agencement de capteurs selon l'une des revendications 2 à 5,

- où des capteurs sont prévus à chaque étage de cascade k où k ≥ 2,
- où chaque capteur d'un étage supérieur m de la cascade est alimenté par un courant BIAS résultant de la différence ou de la somme des courants de commande provenant de deux capteurs (SEm1, SEm2) de l'étage de cascade respectivement précédent,
- où chaque capteur de cette étage de cascade supérieur est alimenté par une autre différence ou somme de courants de commande provenant de l'étage de cascade précédent.

**7.** Agencement de capteurs selon l'une des revendications 2 à 6,
où des capteurs présentant un décalage entre eux par rapport à la grandeur X à déterminer sont prévus à chaque étage de cascade k.

**8.** Agencement de capteurs selon l'une des revendications 1 à 7,
où tous les capteurs (SE) sont disposés sur une plaquette commune.

**9.** Agencement de capteurs selon l'une des revendications 1 à 8,
où tous les capteurs (SE) d'un étage de cascade présentent le même écartement par rapport à un axe de rotation (A) du corps (K).

**10.** Agencement de capteurs selon la revendication 9,
où tous les capteurs (SE) de différents étages de cascade présentent un écartement différent par rapport à l'axe de rotation (A) du corps.

**11.** Agencement de capteurs selon l'une des revendications 2 à 10,

- où une unité d'évaluation (AE) est prévue,
- où au moins deux signaux de capteur ou courants de commande fournis par les capteurs (SEn) ou amplificateurs (Vn) du n-ième et donc dernier étage de cascade sont appliqués à l'entrée de l'unité d'évaluation,
- l'unité d'évaluation déterminant la valeur de l'angle de rotation X à partir des signaux d'entrée dépendant de $\sin(n*X)$ et $\cos(n*X)$.

**12.** Agencement de capteurs selon l'une des revendications 1 à 11,
où les amplificateurs (V) sont constitués comme amplificateurs à transimpédance.

**13.** Procédé de détermination de l'angle de rotation X d'un corps (K),

- où un premier et un deuxième capteur (SE1, SE2) connectés dans une cascade, décalés entre eux dans le sens de rotation de l'angle de rotation X à détecter et présentant respectivement une dépendance par rapport au sinus de l'angle de rotation X sont prévus,
- où le signal de capteur fourni par le premier capteur (SE1) est converti en un courant BIAS et appliqué au deuxième capteur (SE2), le produit du courant BIAS appliqué et de la fonction sinX détectée par le deuxième capteur (SE2) étant obtenu comme signal de capteur du deuxième capteur,
- où la valeur de X est déterminée à partir du produit dans une unité d'évaluation (AE).

**14.** Procédé selon la revendication 13,

- où sont prévus deux premiers capteurs (SE11, SE12) dont le décalage relativement à l'angle de rotation X est choisi de telle manière qu'une dépendance du signal de capteur par rapport à sinX est donnée dans un capteur et qu'une dépendance du signal de capteur par rapport à cosX est donnée dans l'autre capteur,
- où des courants BIAS sont générés à partir des signaux de capteur des deux premiers capteurs et appliqués à au moins deux deuxièmes capteurs (SE2).

**15.** Procédé selon la revendication 14,

- où plusieurs premiers capteurs (SE1) respectivement décalés entre eux relativement à l'angle de rotation X sont prévus,
- où les courants BIAS pour l'étage de cascade respectivement supérieur m sont obtenus par addition ou soustraction des signaux de capteur respectifs ou des courants générés à partir de ceux-ci de l'étage de cascade précédent m-1.

**16.** Procédé selon l'une des revendications 13 à 15,

- où des capteurs magnétiques de Hall sont utilisés comme capteurs (SE),
- où la tension de Hall dépendante de sinX de chaque premier capteur est transposée comme signal de capteur en un courant de commande moyennant un amplificateur (V1) et utilisée comme courant BIAS pour les deuxièmes capteurs (SE2).

**17.** Procédé selon l'une des revendications 13 à 16,
où sont prévus des troisièmes capteurs (SE3) auxquels des courants de commande générés à partir des signaux de capteur des deuxièmes capteurs (SE2) sont appliqués comme courants BIAS,
où l'unité d'évaluation (AE) est alimentée par les signaux de capteur des troisièmes capteurs ou des courants générés à partir de ceux-ci.

**18.** Procédé selon l'une des revendications 13 à 17,
où des premiers capteurs et suivants sont disposés linéairement, et où, à partir des relations d'angle que présente un corps relié à un aimant avec les différents capteurs, le lieu X du corps est déterminé en effectuant, à partir d'un angle déterminé au moyen de l'agencement de capteurs, la conversion de l'arc de cercle associé en le lieu obtenu par une projection radiale.

Fig 1

Fig 3

Fig 2

Fig 4

Fig 5

Fig 6

Fig 7

Fig 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03060537 A1